# EUROPEAN PATENT SPECIFICATION

(11) **EP 2 776 739 B1**
(45) Date of publication and mention of the grant of the patent: **15.03.2017**
(21) Application number: 12780290.8
(22) Date of filing: 14.09.2012
(51) Int. Cl.: F16H 45/02, B60K 25/02

(54) **A TRANSMISSION SYSTEM FOR VEHICLES**
GETRIEBESYSTEM FÜR FAHRZEUGE
SYSTÈME DE TRANSMISSION POUR VÉHICULES

(30) Priority: 15.09.2011 IT PD20110292
(43) Date of publication of application: 17.09.2014
(73) Proprietor: Carraro Drive Tech S.p.A., 35027 Padova (IT)
(72) Inventor: MANGIARACINA, Enrico, I-35127 Padova (IT); PINTURI, Lucio, I-35011 Campodarsego (PD) (IT); ORNELLA, Giulio, I-33080 Zoppola (PN) (IT)
(74) Representative: Locas, Davide
(86) International application number: PCT/IB2012/054819
(87) International publication number: WO 2013/038380

(56) References cited:
- WO-A1-2010/070873
- GB-A- 2 275 511
- US-A- 5 129 870
- US-A- 5 819 587
- US-A1- 2010 236 361

## Description

The present invention relates to a transmission system for industrial vehicles, of the type comprising a torque converter and a geared mechanical transmission which transmits the motion from the converter output to the driving wheels of the vehicle.

There are generally known transmission systems of the type in which a torque converter is used in association with a mechanical transmission, particularly a gearbox, typically designed for vehicles for agricultural or industrial use.

In these applications, the load on the engine is highly variable, and the use of the torque converter is particularly advantageous because the converter output torque can vary according to the operating conditions.

However, the presence of a torque converter leads to a number of drawbacks, mainly arising from the dissipation of energy in the form of heat due to the hydraulic transmission of the motion.

More precisely, as the difference between the engine speed and the vehicle speed increases, the quantity of heat dissipated also increases, and the efficiency of the converter decreases as a result.

In order to overcome this drawback, transmission systems have been developed in which the torque converter can be locked up, in other words in which a device is provided for fixing the pump and turbine of the converter to each other, with direct transmission of the motion of the driving shaft.

This device can be provided inside the converter, with an internal locking clutch, such as that described in GB 2389155, or externally, by providing a further external driven shaft, connected to the converter output, which can be locked by means of a clutch on to the converter input, on the casing of the pump.

An example of an embodiment of the latter solution is given in EP 2 169 270, which describes a transmission for industrial vehicles in which the torque converter is connected to two output shafts, the first of which is connected to the turbine, and therefore to the output of the converter, while the second is connected to the casing of the converter, in other words to its input.

The second shaft, connected to the casing, is hollow, and the shaft connected to the turbine is supported rotatably inside this second shaft. Additionally, the second shaft has a gear wheel which transmits the movement to a driven intermediate shaft. This intermediate shaft is normally idle and can be connected via a pair of gears which can be engaged by means of a clutch keyed on to to the driven shaft.

When the gears are engaged, the motion of the casing is transmitted directly to the turbine, so that these elements rotate jointly, and the torque converter is thus locked up.

However, both of these solutions have drawbacks. In particular, the positioning of a locking clutch inside the torque converter is rather complicated and entails high production costs.

As regards the second type of solution, the need to use a further intermediate shaft results in rather large overall dimensions. Moreover, during the operation of the torque converter the idle rotating components cause a dissipation of energy which is preferably to be avoided.

A further solution is described in US Patent 5,819,587 , which discloses a transmission system according to the preamble of claim 1, in which the output shaft of the converter is hollow, and the input shaft extends within it and also projects beyond an end of the output shaft distal from the converter. In this position, a clutch is provided for joining the input and output shafts of the converter together with respect to rotation, thus providing the locking action. A similar solution is described in US 5,129,870.

However, even these solutions are not free of drawbacks, because, during operation with the converter locked up, in other words with the pump and turbine joined together with respect to rotation, the known systems do not work in an optimal way, since the damping effect provided by the hydraulic transmission is no longer present; instead, there is a rigid connection between the transmission and the engine, resulting in an increase in the vibration transmitted from the latter, with an adverse effect on driving comfort and the life of the mechanical components.

This problem is mitigated to some extent in the transmission described in International Patent Application WO 2010/070873, in which a damper is provided between the driving shaft and the pump of the converter.

However, this solution also suffers from some drawbacks, as the whole of the power entering the transmission always passes through the damper, which therefore has to operate in highly variable conditions; in particular, its rigidity operates in series with the variable rigidity of the converter when the motion transmission takes place hydraulically, whereas it acts separately during operation with the pump and turbine locked, with transmission of the mechanical motion.

This makes it particularly difficult to select and correctly design a damper capable of operating effectively in all the conditions of motion of the system. Consequently the reduction of the vibration entering the transmission in different operating conditions is less effective, and the cost is greater than that of a solution which has to operate only during the mechanical transmission of the motion.

Therefore, the technical problem which is addressed by the present invention is that of providing a vehicle transmission which can overcome the drawbacks mentioned above with reference to the prior art.

This problem is resolved by the transmission system according to Claim 1.

The present invention has some considerable advantages. The principal advantage is the fact that the transmission system according to the present invention enables the torque converter to be locked up by means of a system which is simple to produce and which also reduces energy dissipation to a minimum. Furthermore, the converter is locked up in a soft manner, thus improving driving comfort in these phases. Additionally, the system provides effective vibration damping overall, in all conditions of motion, using a solution which is simple and effective in terms of construction.

Further advantages, features and methods of use of the present invention are made clear by the following detailed description of some embodiments, provided as non-limiting examples. Reference will be made to the figures on the appended drawings, of which:
- Figure 1 is a schematic illustration in sectional side view of a transmission system according to the present invention; and
- Figure 2 is a schematic sectional side view of a clutch and a corresponding damper which are details of the transmission system of Figure 1.

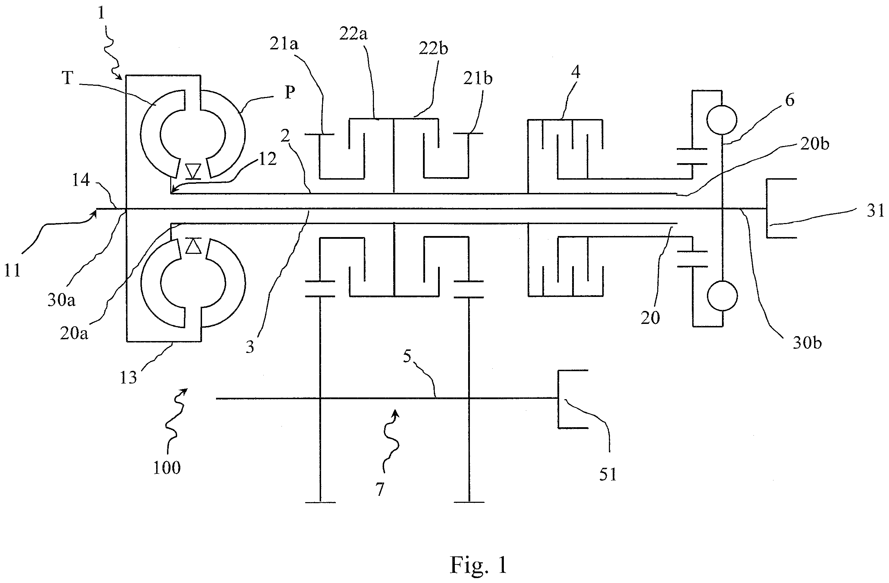

With reference to Figure 1 in the first place, a transmission system according to the present invention is indicated as a whole by the reference numeral 100.

The transmission system 100 comprises a torque converter 1 of a known type connected to a driving shaft, not shown in the drawing, at an input 11. The driving shaft receives a rotary motion from an engine, for example an internal combustion engine. Additionally, the input 11 of the converter 1 is formed at a hub 14 of the converter, on which the casing 13 of the converter 1 is supported.

The casing 13 thus forms a toroidal chamber which houses a centrifugal pump P, which is also fixed to the input 11 and to the driving shaft so as to act on a working fluid present in the casing 13.

The converter 1 further comprises a turbine T to which the working fluid transfers energy so as to cause the rotation of an output 12 of the converter which is fixed to the turbine.

In this way, therefore, a hydraulic connection is formed between the driving shaft and the output of the torque converter 1. In any case, the modes of operation of the torque converter 1 are known to persons skilled in the art, and therefore will not be described in further detail.

The transmission system according to the present invention comprises two separate shafts leading from the torque converter 1, namely a first shaft 2 connected to the output 12 of the converter 1 and fixed to the turbine, which is therefore also referred to as the output shaft 2, and a second shaft 3, which is connected to the input 11 of the converter, and which is therefore fixed to the casing 13 of the converter, this shaft also being referred to below as the input shaft 3.

More precisely, the first shaft 2 is tubular, in such a way that a cavity 20 is formed, and the second shaft 3 can extend within this shaft and is coaxial with it. The two input and output shafts are also referred to below, respectively, as the inner and outer shafts. It should be noted that this configuration is the opposite of that used in EP 2 169 270, in which the shaft connected to the casing lies outside the shaft connected to the turbine.

The second shaft 3 extends from the hub 14 of the converter 1, to which it is rigidly connected, to an output end 31, at which an output of the transmission system is provided for connection to an ancillary pump, not shown in the drawing, or to other means for actuating the working components of the vehicle, in other words those not involved in the phases of motion. Thus the engine of the vehicle can supply power to the ancillary equipment of the vehicle by bypassing the converter 1 and therefore avoiding the dissipation phenomena associated with this component.

The second shaft 3 also has a greater longitudinal extension than the first shaft 2, in such a way that, when the second shaft is inserted into the first, a first end 30a and a second end 30b, axially opposed to the first, are defined, each of these ends being outside the first shaft 2 and, more precisely, each of these ends projecting axially from the corresponding end 20a, 20b of the first shaft 2.

The first end 30a is connected to the hub 14 of the converter 1, while a mechanical damper 6, described in greater detail below, is keyed on to the second end 30b.

The damper 6 therefore transmits the motion of the second shaft 3 to a clutch 4, coaxial with the input shaft 3 and output shaft 2, which allows the motion of the second shaft 3, and therefore the motion of the driving shaft, to be transmitted, on command, to the output shaft 2.

When the clutch is engaged, the two shafts are joined together, and consequently the input 11 and output 12 of the torque converter 1 rotate at the same speed, or, in other words, the converter is locked up.

On the other hand, when the clutch is disengaged, the output shaft 2 rotates in accordance with the characteristic curve of the torque converter 1, while the input shaft 3 again rotates jointly with the driving shaft, thus driving the loads connected to the output 31.

The second shaft 2 further comprises at least one output gear keyed on to this shaft in a longitudinally intermediate position between the clutch 4 and the converter 1.

The output gear enables the motion of the shaft 2 to be transmitted to a gearbox 7, shown purely schematically in the drawing, from which the motion is transmitted to the wheels via an output 51 of a transmission shaft 5.

In the present embodiment, there are two output gears 21a, 21b, which can be engaged selectively by means of respective clutches 22a, 22b.

Thus part of the gearbox 7 can be constructed directly on the output shaft 2, thereby helping to reduce the overall dimensions of the whole transmission system 100.

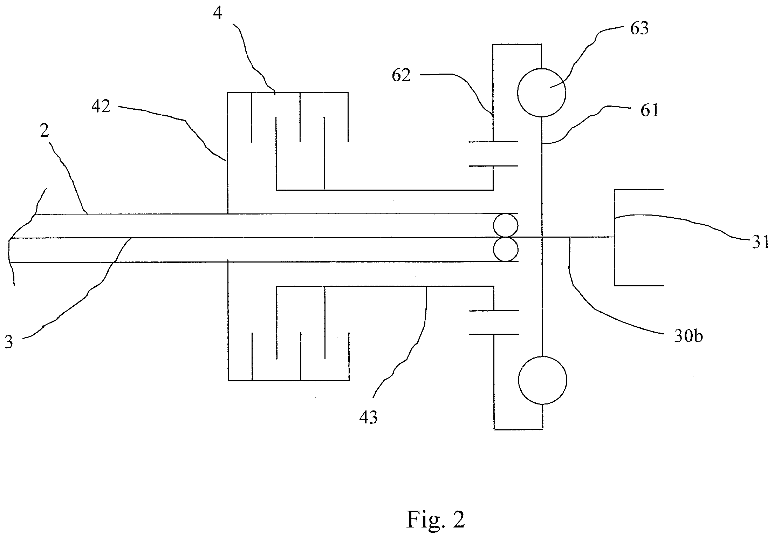

The damper 6 and the connecting clutch 4 between the first and second shafts 2 and 3 will now be described in detail with reference to Figure 2.

In particular, the damper 6 comprises a base 61 of plastic material or other material which is sufficiently rigid to allow the transmission of the motion, connected rigidly to the end 30b of the second shaft 3, and a flange 62 fixed to the base 61 and rigidly connected to the clutch 4 at the position of a driving element 43 of the clutch. One or more resilient elements 63 capable of damping the vibrations can be interposed between the flange 62 and the base 61.

The clutch 4 comprises a driven element 42, keyed on to the shaft 2, which can receive the motion from the driving element 43 when the clutch is engaged.

The damper 6 therefore makes the process of engaging the clutch 4 softer, and consequently improves driving comfort during the locking of the torque converter. It also limits the vibration transmitted to the shaft 2 and to the other components of the transmission in sequence, thus reducing the stress to which the system is subjected.

Additionally, by comparison with other known solutions using dampers, in the present invention the damper has the advantage of operating only when the converter 1 is locked up, whereas, when the transmission of motion takes place through the hydraulic connection, the damping effect is provided by the converter itself, thus avoiding the problems described above.

Furthermore, when the motion takes place with the shafts 2 and 3 locked, it can limit the vibration issuing from the gear changing mechanism, during gear changing for example, thus providing optimal protection for the converter 1 and the gearbox.

Clearly, therefore, the transmission system described above can be used to overcome the problems identified with reference to the present invention, aided by the use of two coaxial output shafts, of which the inner shaft is connected to the driving shaft, these shafts being connectable to each other via a clutch which is also coaxial with the shafts.

This feature enables the power of the engine to be made available outside the transmission system, using a compact and reliable solution.

A further advantage is provided by the fact that the clutch 4 can also be slip-controlled; in other words, a certain amount of slip can be provided between the driving element 43 and the driven element 42, in order to obtain the partial transmission of the power of the inner shaft 3 to the outer shaft 2, and thus provide intermediate operating conditions between those in which the motion is transmitted by the converter 1 and those in which the converter is locked up.

Additionally, this configuration advantageously allows the use of a damper between the inner and outer shafts, this damper being able to operate only when the converter 1 is locked up.

## Claims

1. A transmission system (100) for a vehicle comprising:
a. a torque converter (1) which includes:
▪ an input (11) for connection to a driving shaft, the input (11) of the converter being formed by a support hub (14) of a casing (13) of the converter (1) on which a pump of the converter (1) is supported; and
▪ an output (12) hydraulically connected to the input (11) via a turbine of the converter (1) driven by the pump;
b. an output shaft (2) and an input shaft (3) of the converter (1);
c. a gearbox (7) which can be connected to the driving wheels of the vehicle;
d. a selective connection member (4) for selectively transmitting the motion of the input shaft (3) to the output shaft (2) or allowing the independent rotation of the input and output shafts (2, 3);
wherein:
▪ the output shaft (2) is:
- rigidly connected to the output (12) of the torque converter (1);
- connected to the gearbox (7) by means of at least one output gear (21a, b); and
▪ the input shaft (3):
- is rigidly connected to the input (11) of the torque converter (1);
- is coaxial with the output shaft (2) and positioned inside this shaft (2) in a cavity (20) therein; and
- has a further output (31) for connection to a service pump of the vehicle;
wherein there are formed on the input shaft (3) a first end (30a) and a second end (30b) axially opposite the first end, each end projecting in an axial direction relative to respective ends (20a, b) of the output shaft (2);
wherein the output shaft (2) comprises at least one output gear (21a, b) disposed in a longitudinally intermediate position between the selective connection member (4) and the converter (1), **characterized by** a mechanical damper (6) interposed between the input shaft (3) and the output shaft (2) and interacting with the selective connection member (4); wherein
the first end (30a) is connected to the support hub (14) of the converter (1), while the mechanical damper (6) is keyed on to the second end (30b).

2. A transmission system (100) for a vehicle according to Claim 1, wherein the input shaft (3) has a greater longitudinal extension than the output shaft (2).

3. A transmission system (100) for a vehicle according to Claim 2, wherein the damper (6) comprises a base (61) for the transmission of the motion, connected rigidly to the second end (30b) of the input shaft (3) and a flange (62) fixed to the base (61) and rigidly connected to the selective connection member (4) at the position of a driving element (43), and wherein at least one resilient element (63) is interposed between the base (61) and the flange (62).

4. A transmission system (100) for a vehicle according to Claim 3, wherein the selective connection member (4) comprises a driven element (42), keyed on to the output shaft (2), for receiving the motion from the driving element (43) when the selective connection member (4) transmits the motion of the input shaft (3) to the output shaft (2).

5. A transmission system (100) for a vehicle according to any of the preceding claims, wherein the output shaft (2) comprises two output gears (21a, b), each gear being selectively engageable by means of a respective connection member (22a, b).

6. A transmission system (100) for a vehicle according to any of claims 1 to 4, wherein said output gear (21a, b) is keyed on to said output shaft (2) in said longitudinally intermediate position between the selective connection member (4) and the converter (1).

7. A transmission system (100) for a vehicle according to any of the preceding claims, wherein the selective connection member (4) is coaxial with the input and output shafts (2, 3).

## Patentansprüche

1. Getriebesystem (100) für ein Fahrzeug, umfassend:
a. einen Drehmomentwandler (1), umfassend:
▪ einen Eingang (11) zur Verbindung mit einer Antriebswelle,
wobei der Eingang (11) des Wandlers durch eine Stütznabe (14) eines Gehäuses (13) des Wandlers (1) ausgebildet ist, an der eine Pumpe des Konverters (1) abgestützt ist; und
▪ einen Ausgang (12), der mit dem Eingang (11) über eine Turbine des Wandlers (1) hydraulisch verbunden ist, die von der Pumpe angetrieben wird;
b. eine Ausgangswelle (2) und eine Eingangswelle (3) des Wandlers (1);
c. ein Getriebe (7), das mit den Antriebsrädern des Fahrzeugs verbindbar ist;
d. ein selektives Verbindungselement (4) zur selektiven Übertragung der Bewegung der Eingangswelle (3) auf die Ausgangswelle oder zum Ermöglichen einer unabhängigen Drehung der Eingangs- und Ausgangswellen (2, 3);
wobei:
▪ die Ausgangswelle (2):
- mit der Ausgangswelle (12) des Drehmomentwandlers (1) starr verbunden ist;
- mit dem Getriebe (7) mittels zumindest einem Ausgangszahnrad (21a, b) verbunden ist; und
▪ die Eingangswelle (3):
- mit im Eingang (11) des Drehmomentwandlers (1) starr verbunden ist;
- koaxial zur Ausgangswelle (2) verläuft und im Innern dieser Welle (2) in einem Hohlraum (20) darin positioniert ist; und
- einen weiteren Ausgang (31) zur Verbindung mit einer Servicepumpe des Fahrzeugs aufweist;
wobei auf der Eingangswelle (3) ein erstes Ende (30a) und ein zweites Ende (30b) axial gegenüber dem ersten Ende ausgebildet sind, wobei jedes Ende in Axialrichtung relativ zu jeweiligen Enden (20a, b) der Ausgangswelle (2) vorragt;
wobei die Ausgangswelle (2) zumindest ein Ausgangszahnrad (21a, b) aufweist, das an einer in Längsrichtung mittleren Position zwischen dem selektiven Verbindungselement (4) und dem Wandler (1) angeordnet ist, **gekennzeichnet durch**
einen mechanischen Dämpfer (6), der zwischen der Eingangswelle (3) und der Ausgangswelle (2) angeordnet ist und mit dem selektiven Verbindungselement (4) zusammenwirkt; wobei
das erste Ende (30a) mit der Stütznabe (14) des Wandlers (1) verbunden ist, während der mechanische Dämpfer (6) am zweiten Ende (30b) befestigt ist.

2. Getriebesystem (100) für ein Fahrzeug nach Anspruch 1, wobei die Eingangswelle (3) eine größere Längserstreckung als die Ausgangswelle (2) aufweist.

3. Getriebesystem (100) für ein Fahrzeug nach Anspruch 2, wobei der Dämpfer (6) zur Übertragung der Bewegung eine Basis (61), die mit dem zweiten Ende (30b) der Eingangswelle (3) starr verbunden ist, und einen Flansch (62) umfasst, der an der Basis (61) befestigt ist und mit dem selektiven Verbindungselement (4) an der Position eines Antriebselements (43) starr verbunden ist, und wobei zumindest ein elastisches Element (63) zwischen der Basis (61) und dem Flansch (62) angeordnet ist.

4. Getriebesystem (100) für ein Fahrzeug nach Anspruch 3, wobei das selektive Verbindungselement (4) ein an der Ausgangswelle (2) befestigtes Abtriebselement (42) zum Aufnehmen der Bewegung vom Antriebselement (43) aufweist, wenn das selektive Verbindungselement (4) die Bewegung der Eingangswelle (3) auf die Ausgangswelle (2) überträgt.

5. Betriebssystem (100) für ein Fahrzeug nach einem der vorhergehenden Ansprüche, wobei die Ausgangswelle (2) zwei Ausgangszahnräder (21a, b) umfasst, wobei jedes Zahnrad mittels eines jeweiligen Verbindungselements (22a, b) selektiv in Eingriff bringbar ist.

6. Getriebesystem (100 für ein Fahrzeug nach einem der Ansprüche 1 bis 4, wobei das Ausgangszahnrad (21a, b) an der Ausgangswelle (2) an der in Längsrichtung mittleren Position zwischen dem selektiven Verbindungselement (4) und dem Wandler (1) befestigt ist.

7. Getriebesystem (100) für ein Fahrzeug nach einem der vorhergehenden Ansprüche, wobei das selektive Verbindungselement (4) koaxial zu den Eingangs- und Ausgangswellen (2, 3) verläuft.

## Revendications

1. Système de transmission (100) pour un véhicule comprenant :
a. un convertisseur de couple (1) qui comporte :
▪ une entrée (11) pour la liaison à un arbre d'entraînement, l'entrée (11) du convertisseur étant formée par un moyeu de support (14) d'un boîtier (13) du convertisseur (1) sur lequel une pompe du convertisseur (1) est supportée ; et
▪ une sortie (12) reliée hydrauliquement à l'entrée (11) via une turbine du convertisseur (1) entraînée par la pompe ;
b. un arbre de sortie (2) et un arbre d'entrée (3) du convertisseur (1) ;
c. une boîte de vitesses (7) qui peut être reliée aux roues motrices du véhicule ;
d. un organe de liaison sélective (4) pour la transmission sélective du mouvement de l'arbre d'entrée (3) à l'arbre de sortie (2) ou permettre la rotation indépendante des arbres d'entrée et de sortie (2, 3) ;
dans lequel :
▪ l'arbre de sortie (2) est :
- relié rigidement à la sortie (12) du convertisseur de couple (1) ;
- relié à la boîte de vitesses (7) au moyen d'au moins une roue dentée de sortie (21a, b) ; et
▪ l'arbre d'entrée (3) :
- est relié rigidement à l'entrée (11) du convertisseur de couple (1) ;
- est coaxial à l'arbre de sortie (2) et positionné à l'intérieur de cet arbre (2) dans une cavité (20) dans celui-ci ; et
- a une autre sortie (31) pour la liaison à une pompe de service du véhicule ;
dans lequel sont formées sur l'arbre d'entrée (3), une première extrémité (30a) et une deuxième extrémité (30b) axialement opposée à la première extrémité, chaque extrémité faisant saillie dans une direction axiale par rapport à des extrémités (20a, b) respectives de l'arbre de sortie (2) ;
dans lequel l'arbre de sortie (2) comprend au moins une roue dentée de sortie (21a, b) disposée dans une position longitudinalement intermédiaire entre l'organe de liaison sélective (4) et le convertisseur (1), **caractérisé par** un amortisseur mécanique (6) interposé entre l'arbre d'entrée (3) et l'arbre de sortie (2) et interagissant avec l'organe de liaison sélective (4) ; dans lequel la première extrémité (30a) est reliée au moyeu de support (14) du convertisseur (1), pendant que l'amortisseur mécanique (6) est claveté sur la deuxième extrémité (30b).

2. Système de transmission (100) pour un véhicule selon la revendication 1, dans lequel l'arbre d'entrée (3) a une extension longitudinale supérieure à celle de l'arbre de sortie (2).

3. Système de transmission (100) pour un véhicule selon la revendication 2, dans lequel l'amortisseur (6) comprend une base (61) pour la transmission du mouvement, reliée rigidement à la deuxième extrémité (30b) de l'arbre d'entrée (3) et une bride (62) fixée à la base (61) et reliée rigidement à l'organe de liaison sélective (4) à la position d'un élément d'entraînement (43), et dans lequel au moins un élément résilient (63) est interposé entre la base (61) et la bride (62).

4. Système de transmission (100) pour un véhicule selon la revendication 3, dans lequel l'organe de liaison sélective (4) comprend un élément entraîné (42), claveté sur l'arbre de sortie (2), pour la réception du mouvement de l'élément d'entraînement (43) lorsque l'organe de liaison sélective (4) transmet le mouvement de l'arbre d'entrée (3) à l'arbre de sortie (2).

5. Système de transmission (100) pour un véhicule selon l'une quelconque des revendications précédentes, dans lequel l'arbre de sortie (2) comprend deux roues dentées de sortie (21a, b), chaque roue dentée étant sélectivement engageable au moyen d'un organe de liaison (22a, b) respectif.

6. Système de transmission (100) pour un véhicule selon l'une quelconque des revendications 1 à 4, dans lequel ladite roue dentée de sortie (21a, b) est clavetée sur ledit arbre de sortie (2) dans ladite position longitudinalement intermédiaire entre l'organe de liaison sélective (4) et le convertisseur (1).

7. Système de transmission (100) pour un véhicule selon l'une quelconque des revendications précédentes, dans lequel l'organe de liaison sélective (4) est coaxial aux arbres d'entrée et de sortie (2, 3).
